Europäisches Patentamt

European Patent Office

Office européen des brevets

(19)

(11) Publication number: **0 022 663**
**B1**

(12) **EUROPEAN PATENT SPECIFICATION**

(45) Date of publication of patent specification: **21.09.83**

(51) Int. Cl.³: **H 02 P  13/18, H 02 P  5/40**

(21) Application number: **80302349.8**

(22) Date of filing: **10.07.80**

(54) **PWM inverter device.**

(30) Priority: **13.07.79 JP  88164/79**

(43) Date of publication of application:
**21.01.81 Bulletin 81/3**

(45) Publication of the grant of the patent:
**21.09.83 Bulletin 83/38**

(84) Designated Contracting States:
**CH DE FR GB LI**

(56) References cited:
**EP - A - 0 023 116**
**DE - A - 2 151 588**
**DE - C - 1 095 931**
**FR - A - 2 004 061**

**1978, 4th IECI ANNUAL CONFERENCE
PROCEEDINGS, "Industrial applications of
microprocessors", March 20—22, 1978, pages
223—226 Editor: DR. SOTIRIOS J.
VAHAVIOLOS, Western Electric Co. HOANG LE-
HUY: "A Microprocessor-Controlled Pulsewidth
Modulated Inverter"**

(73) Proprietor: **TOYO DENKI SEIZO KABUSHIKI
KAISHA
No. 7-2 2-Chome Yaesu Chuo-Ku
Tokyo 104 (JP)**

(72) Inventor: **Kohata, Mazakazu
No 10-7, 6-Chome Oh-Machi
Kamakura City (JP)**
Inventor: **Hayashi, Hideki
No. 6-1-203 Sagamidai-Danchi
Sagamihara City (JP)**
Inventor: **Miyashita, Ichiro
No. 4720-1 Fukuda
Yamato City (JP)**

(74) Representative: **Haggart, John Pawson et al,
Page, White & Farrer 5 Plough Place New Fetter
Lane
London EC4A EC4 (GB)**

Courier Press, Leamington Spa, England.

PWM Inverter device

The present invention relates to a PWM inverter device, operating in accordance with a pulse width modulation (PWM) principle, for energizing an A.C. motor.

In a conventional PWM inverter, the control is effected by using a square wave form voltage obtained by chopping a certain D.C. voltage so that the waveform of the chopped current may differ at each pulse width modulated cycle. The value of the commutating current varies greatly depending on the pulse train even under a constant load condition. More especially, the period of one cycle of the inverter is prolonged in inverse proportion to the output frequency of the inverter for low speed operation. Therefore the number of triangular waves of the carrier signal which occur in this period or the pulse mode is generally increased at lower speed and thus the peak current at current commutation is suppressed. In this case, the waveform of the input current for the inverter assumes the same form as the motor current, the motor being essentially an RL circuit, and increases exponentially so that the current in the voltage pulse at the end of each of the repetition pulses also increases exponentially. Due to this fact the thyristor element and the current commutating circuit elements forming the inverter device should be selected to withstand the maximum current. The inverter input current include high frequency current components which are 6 times higher than the inverter output frequency, as well as the chopping frequency, since the input current flows from the feeder through a filter in the form of three-phase full-wave rectification of the motor current by the inverter. For this reason, at times of low frequency operation such as the starting time, the feeder current may not be sufficiently smoothed because the filter efficiency is low, so that the feeder current may contain ripple components. Moreover in the line in which the inverter input current flows, there is also flow of security signal current which is at the mains frequency. Accordingly, when an electric train is driven by a PWM inverter, the frequency range of the security signal system passes the device in the low frequency range especially at the starting time since the filtering effect is decreased at such low frequency range and signal trouble might be caused.

It is an object of the present invention to overcome the aforementioned disadvantages of the prior art devices and to provide a modulation system which is able to ease the current commutating load of the inverter and to decrease the possibility of currents of lower harmonic component having 6 times the frequency of the inverter output current, being included in the inverter input current so as to obtain a small and light weight device.

A PWM inverter device for energizing an A.C. motor, which device has a variable voltage and variable frequency output produced from a D.C. source by pulse width modulation, in which a triangular waveform is chopped by a synchronous sawtooth waveform is described and claimed in co-pending European Patent Application No. 80302348.0 (Publication number 23116).

According to the invention there is provided a PWM inverter device for energizing an A.C. motor, which device has a variable voltage and variable frequency output from a D.C. source by pulse width modulation, comprising an oscillator for generating a pulse train whose frequency is an integral multiple of the output frequency of the inverter, a function waveform generator controlled by the oscillator to generate a level signal whose frequency is related to the inverter output frequency, a triangular waveform generator for generating a triangular waveform carrier signal having a constant frequency at least 12 times that of the inverter output signal, and a comparator for comparing and mixing the level signal with the triangular waveform carrier signal, characterised in that the function waveform generator is a sawtooth waveform generator and the triangular waveform carrier signal is compared with that sawtooth waveform in the comparator.

Some embodiments of the invention will now be described, by way of example, with reference to the accompanying drawings, in which:—

Figure 1 is a block diagram of a typical conventional circuit arrangement of a PWM inverter device;

Figure 2 is a waveform diagram explaining the operation of the device shown in Figure 1;

Figure 3 is a block diagram of a PWM inverter device according to the present invention.

A device according to the preamble of Claim 1 is described in DE—C—1095931.

Figure 4 is a waveform diagram explaining the operation of the device of Figure 3;

Figures 5 to 7 are waveform diagrams for explaining effect of the modulating part of the inverter device of Figure 3; and

Figure 8 is a block diagram of a modified embodiment according to the present invention.

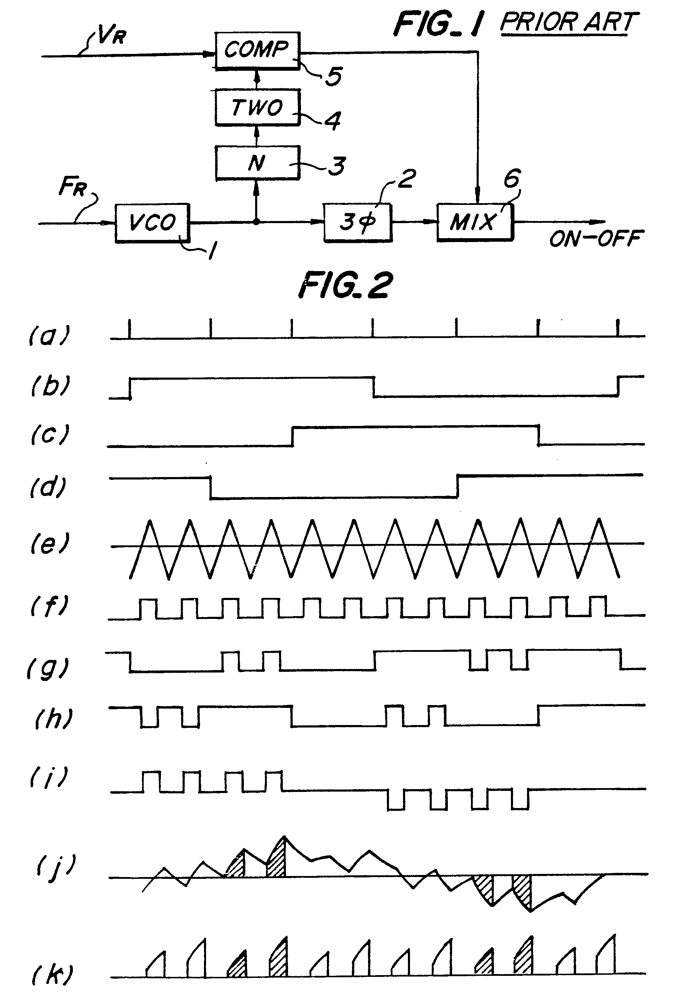

Figure 1 shows a typical embodiment of a conventional modulating part of an inverter device.

In Figure 1 a voltage controlled oscillator 1 is fed as its signal input a frequency instruction $F_R$, and produces a pulse train having a frequency determined by the frequency instruction $F_R$. The pulse train output from the oscillator 1 is fed to a three-phase signal distributor 2 and to a multiplier 3 whose output is fed to a triangular waveform generator 4, whose output is fed to a

**0 022 663**

comparator 5 in which the triangular waveform is compared with a constant voltage level signal VR. The outputs from the comparator 5 and the distributor 2 are mixed by a mixer 6.

The operation of the device shown in Figure 1 will be explained by referring to Figure 2.

The voltage controlled oscillator 1 produces a pulse train as shown in Figure 2(a), which is synchronized with the inverter output frequency and having a pulse repetition frequency which is an integral multiple of the inverter output frequency. This pulse train is fed to an input of the three-phase signal distributor 2 and is converted into three signals having a 120° phase difference between each other as shown in Figures 2(b), (c) and (d).

The pulse train from the oscillator 1 is also supplied to an input of the multiplier 3 where it is integrally multiplied, and a triangular waveform carrier signal as shown in Figure 2(e) is produced by the triangular waveform generator 4. The multiplier multiplies by a factor of 2 and this determines the pulse mode. This carrier signal is compared with the constant voltage level signal $V_R$ in the comparator 5 and a chopping signal as shown in Figure 2(f) is produced. This chopping signal is mixed with the output signals of the three-phase signal distributor 2 in the mixer 6 to produce ON-OFF signals as shown in Figures 2(g) and (h) having cut-offs corresponding to a 60° phase duration. In Figures 2(g) and (h) only waveforms for two of the phases are shown, but it is apparent that three similar waveforms, having 120° phase differences from each other, are produced by the mixer 6. The main circuit of the inverter device is closed or opened under the control of this ON-OFF signal and the inverter output voltage has a rectangular waveform as shown in Figure 2(i). When such an inverter output voltage is applied to an A.C. motor, the current waveform assumes a complicated shape as shown in Figure 2(j), which shows abrupt variations at the times of ON-OFF transition. The inverter input current corresponds to hatched line portions in Figure 2(j) which are equal to three-phase full-wave rectification. The inverter input current has the waveform shown in Figure 2(k), the envelope of which contains 6 times the frequency of the motor frequency. At low frequencies the device is used to raise the chopping signal frequency by increasing the pulse mode. However, since the motor frequency is generally low, so that the overall filtering effect is small, there is possibility of the low frequency component causing inductive trouble, for instance by such low frequency component current flowing in the rail in a motor driven train.

The present invention provides a novel way of modulating the chopping signal. The invention decreases the current ripple in the inverter input and suppresses the current flowing through the security signal system, which uses a commercial frequency, so as to provide a compact device which is able to prevent security signal troubles effectively.

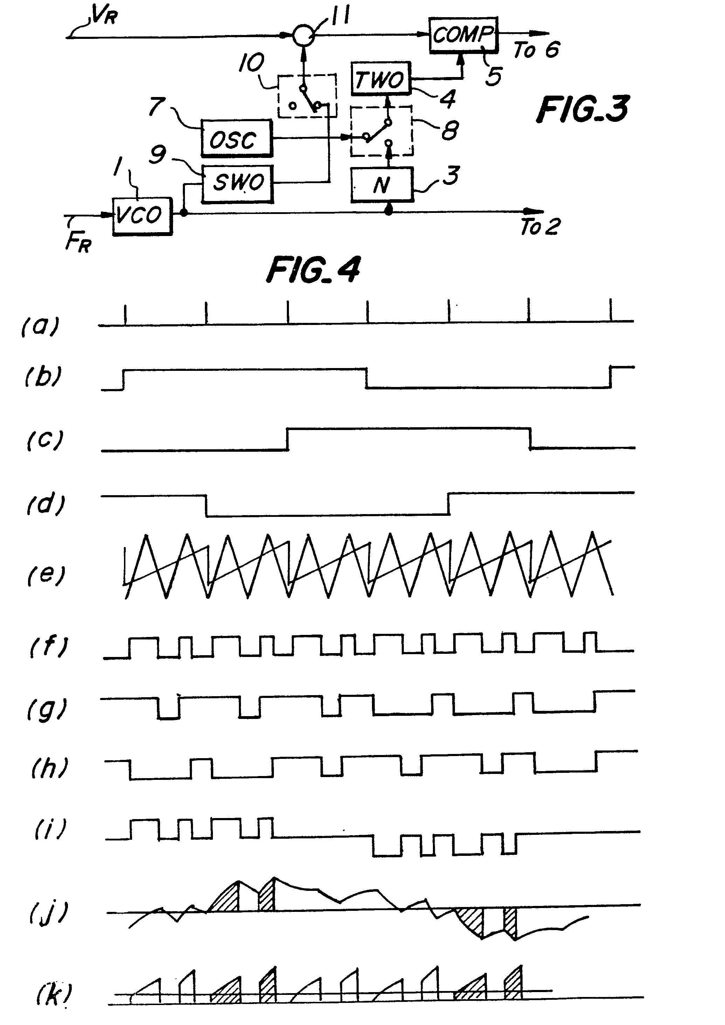

Figure 3 shows simplified block diagram of an inverter, especially the modulation part, according to the present invention. In Figure 3 the same parts as in Figure 1 are designated by the same reference numerals. An oscillator 7 generates a constant frequency signal. There are change-over switches 8 and 10, a sawtooth waveform generator 9, and an adder 11.

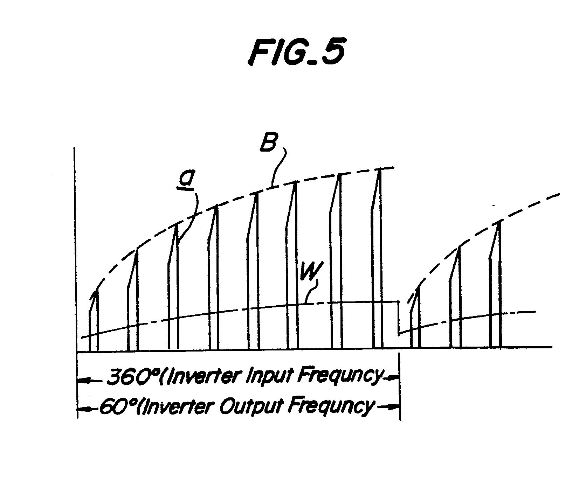

The operation of the device of Figure 3 will be explained by referring to the waveform diagrams of Figure 4. When the change over switches 8 and 10 are switched to their positions opposite those shown in Figure 3, the circuit is identical with that of Figure 1.

In Figure 3, the voltage controlled oscillator 1 produces a pulse train as shown in Figure 4(a) which is synchronized with the inverter output frequency and is controlled by the frequency instruction $F_R$. The three-phase signals having 120° phase differences between each other are generated as shown in Figures 4(b), (c) and (d), by means of a three-phase signal distributor 2 in the same way as described with reference to Figure 1. The triangular waveform generator 4 receives a constant frequency signal having a frequency at least 12 times that of the motor frequency from an oscillator 7 and produces triangular waveform carrier signal synchronized therewith. The output of the oscillator 1 is also supplied to a sawtooth waveform generator 9, which thus produces a sawtooth waveform signal synchronized with the inverter output. This sawtooth waveform signal is added to the constant voltage level signal of the voltage instruction $V_R$ in an adder 11 whose output is compared with the triangular waveform carrier signal in the comparator 5 which produces the chopping signal. The formation and the waveform of the chopping signal are shown in Figures 4(e) and (f). This chopping signal shown in Figure 4(f) is mixed with the three-phase signals shown in Figures 4(b), (c) and (d) in the mixer 6 and converted into ON-OFF signals having cut-off portions through the whole range of 360° as shown in Figures 4(g) and (h). This ON-OFF signal controls opening and closing of the main circuit of the inverter. The waveform shown in Figure 4(i) represents the inverter output voltage and has wider pulse width at beginning half of each waveform and narrower pulse width at terminating half of each waveform.

When such an inverter output voltage is applied with an A.C. motor, a current having the waveform shown in Figure 4 (j) flows and by this current, the inverter input current becomes as shown in Figure 4(k) which indicates a substantially constant average value at each chopping period. By this pulse waveform, the ripple can be suppressed at low frequency.

In the embodiment illustrated in Figure 3, the carrier signal frequency is 12 times of the motor frequency for the convenience of explanation.

However, in practice it is more usual to select a higher carrier signal frequency to effect high frequency modulation. That is, the constant chopping frequency of the carrier signal is conveniently selected in the range of 0.5 to 1 KH$_z$ for obtaining the aforementioned effect and for realizing the desired current commutation. In this range of the chopping frequency, the low frequency component included in the input current of the inverter is reduced and the chopping frequency component becomes large so that the same effect is obtained as though the frequency is increased from lower frequency at the time of starting. This compensates for the decrease in filtering effect at low frequency. The peak value of the motor current also becomes smaller than in the conventional case as shown in Figure 1. Thus it becomes possible to decrease the capacity of thyristor elements and current commutating circuit capacity and the main circuit elements can be miniaturized.

If the PWM inverter device according to the present invention is used for driving an electric train, it is preferable to use in the following practical embodiment.

In a PWM inverter device for driving an electric train, the conventional modulation system is used in the high speed range in which the inverter output frequency is high because the pulse mode is small and there is a filtering effect, and the modulation system of the invention, as shown in Figure 3, is used between the starting time and up to the time when the input frequency of the inverter exceeds the operation frequency of the signal security device using mains frequency and reaching or passing a certain predetermined frequency. For this purpose, the change over switches 8 and 10 shown in the Figure 3 are operated.

In these embodiments the triangular waveform carrier signal is compared with the sawtooth waveform level signal. However, the pulse width of the inverter output voltage may have repetition waveform which decreases linearly and is obtained by modulating the sawtooth waveform exponentially.

This will now be more fully explained with reference to Figures 5 to 6 which are explanatory waveform diagrams for explaining the effect of the present invention at a higher pulse mode at which signal trouble may give problems.

Figure 5 shows inverter input current waveform in the conventional system of Figure 1 and in which equi-spaced pulse width modulation is effected. In this prior art embodiment, an envelope $B$ of the inverter input current waveform $a$ varies exponentially and the average value thereof is shown by a curve $W$. As shown in the drawing, the average value $W$ pulsates and a commutating peak current and a current having frequency 6 times the inverter output frequency flows in the circuit.

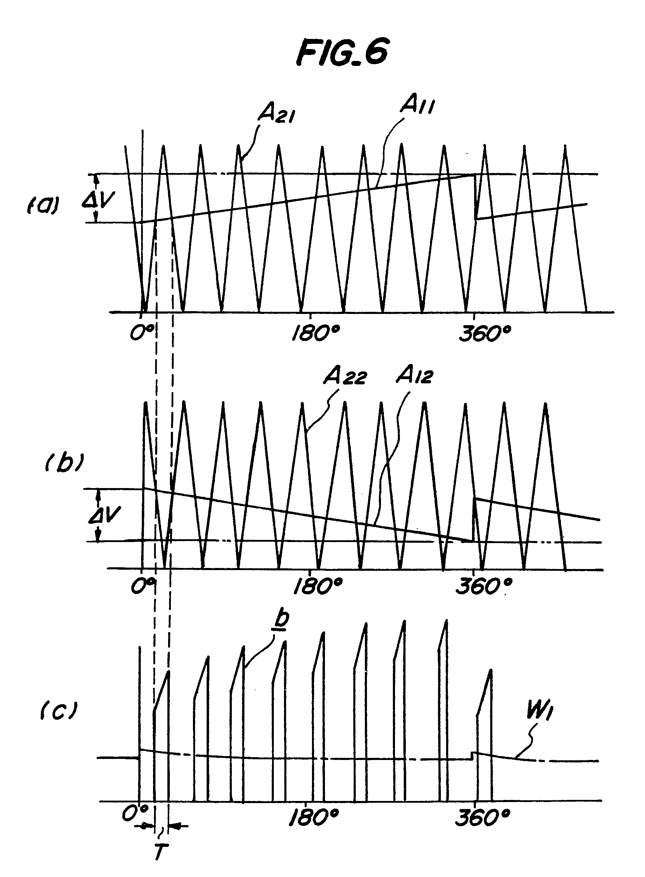

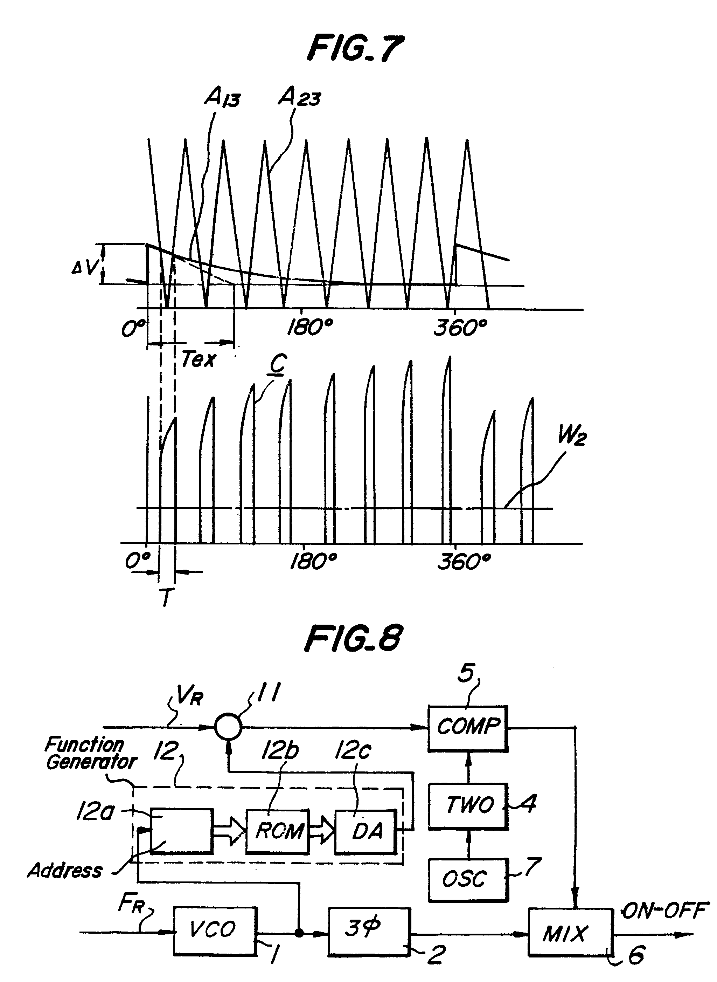

Figures 6 and 7 show the inverter input current waveform when operating the present invention.

Figure 6(a) shows one embodiment of formation of the input current waveform $b$ of the inverter when the level signal A$_{11}$ has a sawtooth waveform whose frequency is 6 times larger than the inverter output frequency. The pulse width T is determined by the crossing points of the triangular waveform carrier signal A$_{21}$ and the sawtooth waveform level signal A$_{11}$ and the pulse width T decreases exponentially. An average value of the inverter input current waveform $b$ for each pulse is shown by curve W$_1$. As can be seen from the drawing this average value W$_1$ is substantially constant. Accordingly, a current component pulsating at 6 times of the inverter output frequency can be suppressed and at the same time the commutating peak current can be suppressed by gradual decrease of the pulse width of the output pulses. It should be noted that some amount of the chopping frequency component remains in the waveform, but by the suppressing effect of the high frequency filter the current in the chopping frequency component can be sufficiently suppressed, and the source current flowing from overhead feeding wires at the input side of the filter to the earth return circuit can have a flat waveform having less higher harmonic components. The depth ΔV of the sawtooth wave as shown in Figure 6 can also be controlled in response to the inverter output frequency. However, by adjusting the fundamental component of the inverter input current to be minimum and by keeping the depth ΔV of the level signal constant, the undesired frequency component can be removed and the aim of the present invention can be achieved.

Figure 6(b) is a waveform of a modified embodiment which gives the same modulation effect as that shown in Figure 6(a). In the embodiment of Figure 6(a), at the crossing points between the sawtooth waveform level signal A$_{11}$ and the triangular waveform carrier signal A$_{21}$, and in the region where the level signal A$_{11}$ is lower than the carrier signal A$_{21}$, the conduction pulse width T is determined. In the embodiment shown in Figure 6(b), both the sawtooth waveform level signal A$_{12}$ and triangular waveform carrier signal A$_{22}$ are reversed, and in a region in which the level signal A$_{12}$ is higher than the carrier signal A$_{22}$, the conduction pulse wave is decided in exactly the same manner as in Figure 6(a). In practice, it is possible to produce this result by reversing the output signal of the triangular waveform generator 4, the voltage instruction V$_R$ and the sawtooth waveform generator 9.

Figure 7 illustrates an arrangement in which the sawtooth waveform level signal A$_{13}$ is an exponential function having the time constant of T$_{EX}$. In this case, the envelope of the inverter input current within one cycle of the inverter input frequency varies exponentially. The conducting pulse width T of the inverter input current $c$ for each pulse within one cycle is also varied exponentially. Accordingly, if we choose the depth $\Delta V$ of the modulation level of the level signal $A_{13}$ and its time constant $T_{EX}$ at suitable values, the average value $W_2$ becomes constant and the current pulsation within one cycle can be eliminated, and the inverter frequency component caused by such pulsation is minimized.

Figure 8 shows an embodiment in which the exponential sawtooth waveform is memorized, and comprises function generating circuits for deriving the necessary signals.

In Figure 8, a function waveform generator 12 is provided, which comprises a memory element 12b being from which the sawtooth waveform is read. The generator 12 further comprises an address instruction part 12a for reading the memorized function waveform content in the memory element 12b and for renewing the output signal successively by an input signal of the oscillator 1 synchronized with the inverter output frequency. A DA (digital-to-analog) converter 12c converts the digital signal read out from the memory element 12b into an analog signal. The analog function signal is added to a constant voltage level $V_R$ in an adder 11. This embodiment is substantially the same with that shown in Figure 3, except the fact that the sawtooth waveform used as the level signal is read from the memory element 12b. By memorizing the sawtooth waveform in the memory, any desired sawtooth waveform can be generated very easily and a correlated waveform of similar form can be readily obtained for a wide range of variation of the inverter output frequency.

The present invention thus provides a novel modulation system in an inverter device, in which a function waveform signal whose frequency is 6 times the motor frequency is superposed on a constant level voltage which is a voltage instruction to derive a triangular waveform modulated carrier signal, so as to make the pulse width at the beginning of a group of pulses of the inverter output voltage waveform, and at the end of the pulse group narrower, thus making the average value of the inverter input current substantially constant. The invention therefore is advantageous by providing a small light weight device which is able to decrease materially current commutating load, and to eliminate signal trouble in an electric motor car driving system.

## Claims

1. A PWM inverter device for energizing an A.C. motor, which device has a variable voltage and variable frequency output produced from a D.C. source by pulse width modulation, comprising an oscillator (1) for generating a pulse train whose frequency is an integral multiple of the output frequency of the inverter, a function waveform generator (9) controlled by the oscillator (1) to generate a level signal whose frequency is related to the inverter output frequency, a triangular waveform generator (4) for generating a triangular waveform carrier signal having a constant frequency at least 12 times that of the inverter output signal, and a comparator (5) for comparing and mixing the level signal with the triangular waveform carrier signal, characterised in that the function waveform generator (9) is a sawtooth waveform generator and the triangular waveform carrier signal is compared with that sawtooth waveform in the comparator (5).

2. A PWM inverter device as claimed in Claim 1, characterised in that the function waveform generator (12) includes a memory element (12b) for memorizing the sawtooth waveform which is read out of the memory element.

## Patentansprüche

1. Ein Pulsweitenmodulations - (PWM) - Wechselrichtergerät zum Versorgen eines Wechselstrommotors mit Energie, das ein Ausgangssignal mit veränderlicher Spannung und veränderlicher Frequenz hat, das durch Pulsweitenmodulation einer Gleichstromquelle erzeugt wird, mit einem Oszillator (1) zum Erzeugen einer Pulskette, deren Frequenz ein ganzes Vielfaches der Ausgangsfrequenz des Wechselrichters ist, mit einem Funktions-Signalform-Generator (9), der durch den Oszillator (1) gesteuert wird, um ein Pegelsignal zu erzeugen, dessen Frequenz in einer Beziehung zu der Frequenz des Ausgangssignales des Wechselrichters steht, mit einem Dreiecks-Signalform-Generator (4) zum Erzeugen eines Trägersignals mit Dreiecks-Signalform, das eine konstante Frequenz hat, die wenigstens dem 21-fachen der Frequenz des Ausgangssignales des Wechselrichters entspricht, und mit einem Komparator (5) zum Vergleichen und Mischen des Pegelsignals mit dem Trägersignal mit Dreiecks-Signalform, dadurch gekennzeichnet, daß der Funktions-Signalform-Generator (9) ein Sägezahn-Signalform-Generator ist und daß das Trägersignal mit Dreiecks-Signalform in dem Komparator (5) mit der Sägezahn-Signalform verglichen wird.

2. Ein Pulsweiten - Modulations - (PWM) - Wechselrichtergerät nach Anspruch 1, dadurch gekennzeichnet, daß der Funktions-Signalform-Generator (12) ein Speicherelement (12b) zum Speichern der Sägezahn-Signalform hat, welche aus dem Speicherelement ausgelesen wird.

## Revendications

1. Dispositif onduleur PWM pour l'alimentation d'un moteur à courant alternatif, ce dispositif présentant une sortie à tension variable et à fréquence variable, fournie par une source de courant continu, par modulation de largeur d'impulsion, comprenant un oscillateur (1) destiné à produire un train d'impulsions dont la fréquence est un multiple entier de la fréquence de sortie de l'onduleur, un générateur de forme d'onde de fonction (9) commandé par l'oscillateur (1), pour produire un signal de niveau dont la fréquence est liée à la fréquence de sortie de l'onduleur, un générateur de forme d'onde triangulaire (4) destiné à produire un signal porteur de forme d'onde triangulaire, ayant une fréquence constante, d'au moins 12 fois celle du signal de sortie de l'onduleur, et un comparateur (5) pour la comparaison et le mélange du signal de niveau avec le signal porteur de forme d'onde triangulaire, caractérisé en ce que le générateur de forme d'onde de fonction (9) est un générateur de forme d'onde en dents de scie, et en ce que le signal porteur de forme d'onde triangulaire est comparé avec cette forme d'onde en dents de scie dans le comparateur (5).

2. Dispositif onduleur PWM selon la revendication 1, caractérisé en ce que le générateur de forme d'onde de fonction (12) comprend un élément à mémoire (12b) destiné à mémoriser ladite forme d'onde en dents de scie qui est lue sur l'élément à mémoire.

FIG. 1 *PRIOR ART*

$V_R$ → COMP ~5

TWO ~4

N ~3

$F_R$ → VCO ~1 → 3φ ~2 → MIX ~6 → ON-OFF

FIG. 2

(a)

(b)

(c)

(d)

(e)

(f)

(g)

(h)

(i)

(j)

(k)

# FIG. 3

# FIG. 4

(a)

(b)

(c)

(d)

(e)

(f)

(g)

(h)

(i)

(j)

(k)

# FIG.5

360°(Inverter Input Frequncy)

60°(Inverter Output Frequncy)

# FIG.6

## FIG.7

## FIG.8